# EUROPÄISCHE PATENTSCHRIFT

(11) **EP 0 897 937 B1**
(45) Veröffentlichungstag und Bekanntmachung des Hinweises auf die Patenterteilung: **22.03.2000**
(21) Anmeldenummer: 98114363.9
(22) Anmeldetag: 30.07.1998
(51) Int. Cl.: C08F 220/04, C08F 220/54

(54) **Verdickungsmittel auf der Basis von Carboxylgruppen- und Carboxylamidgruppen- haltigen Polymerisaten**
Thickener based on polymers containing carboxyl- and carboxylamid groups
Agent épaississant à base de polymères contenant des groupes carboxyle et carboxylamide

(30) Priorität: 18.08.1997 DE 19735736
(43) Veröffentlichungstag der Anmeldung: 24.02.1999
(73) Patentinhaber: Wacker-Chemie GmbH, 81737 München (DE)
(72) Erfinder: Weitzel, Hans-Peter, Dr., 84571 Reischach (DE); Braunsperger, Robert, 84489 Burghausen (DE)
(74) Vertreter: Schuderer, Michael, Dr.

(56) Entgegenhaltungen:
- EP-A- 0 115 436
- EP-A- 0 627 450

## Beschreibung

Die Erfindung betrifft Verdickungsmittel auf der Basis von Carboxylgruppen- und Carboxylamidgruppenhaltigen Polymerisaten, deren Anwendung in Beschichtungsmitteln, Klebemitteln und in hydraulisch abbindenden Bindemitteln sowie Verfahren zu deren Herstellung.

Als Verdickungsmittel werden neben Polyurethan-Verdickern und Cellulosen vielfach Carboxylgruppen- und Carboxylamidgruppenhaltige wässrige Copolymerdispersionen eingesetzt. Diese entwickeln ihre verdickende Wirkung erst im alkalischen Medium nach Neutralisation der Carboxylgruppen. Zur Erzielung einer guten Verdickungswirkung werden in diesen Polymeren hohe Molekulargewichte benötigt. Nachteilig an diesen Produkten ist, daß sie in neutralisierter Form sehr hohe Viskositäten besitzen, in saurer Form aber nicht lagerstabil sind. Zur Vermeidung dieser Nachteile sind folgende Vorgehensweisen bekannt.

In der EP-A 529206 (US-A 5545688) wird Polyacrylamid durch inverse Emulsionspolymerisation hergestellt. Dieses Verfahren kann auch auf Carboxylathaltige Polymere übertragen werden, wobei in der DE-A 3520507 (US-A 4681912) eine Wasser-in-Öl-Mikroemulsion aus einer wässrigen Acrylamid/Acrylsäure-Lösung, einem organischen Lösungsmittel und einem nichtionischen Tensid polymerisiert wird. Nachteilig an dieser Methode ist aber, daß große Mengen an organischen Lösungsmittel verwendet werden müssen um die Phasenumkehr zu gewährleisten, die dann nachträglich wieder aufwendig abgetrennt werden müssen. Diese organischen Lösungsmittel wie Isopar®M und Toluol sind außerdem heutzutage aus ökologischen Gründen nicht zu akzeptieren.

Gemäß der EP-A 736547 (CA-A 2173297) können die oben geschilderten Probleme dadurch umgangen werden, indem man konventionelle Emulsionspolymerisate aus wasserlöslichen und wasserunlöslichen Monomeren herstellt, allerdings ebenfalls in Anwesenheit von organischen Lösungsmitteln, die anschließend destillativ abgetrennt werden müssen. Außerdem ist nachteilig, daß um stabile Dispersionen zu erhalten zusätzlich tensidische Monomere eingesetzt werden, die als assoziativ verdickende Gruppen wirken.

In der EP-A 450437 (US-A 5231145) werden Copolymerisate auf der Basis von Alkylacrylaten und/oder Alkylmethacrylaten, hergestellt mit Polyvinylalkohol als Schutzkolloid, zur Verwendung als Schlichtemittel beschrieben. Die Produkte eignen sich jedoch nicht als Verdickungsmittel, da sie bei Neutralisation keinen Viskositätszuwachs zeigen.

Aufgabe der EP-A 627450 war es, Verdicker auf Basis von (Meth) acrylsäureester/ (Meth)acrylsäure-Copolymerisaten herzustellen, die in saurer Form als stabile Dispersion vorliegen, die keinen Weißenbergeffekt zeigen, und ohne das toxische Ethylacrylat zu verwenden. Gelöst wurde die Aufgabe mittels polyvinylalkoholstabilisierten Copolymerdispersionen auf (Meth)-acrylatbasis, welche als geeignete Verdickungsmittel für wässrige Dispersionen, insbesondere Dispersionsanstrichfarben beschrieben werden. Die verdickende Wirkung ist jedoch nicht ausreichend um die erforderliche Standfestigkeit in hydraulisch abbindenden Massen zu erhalten.

Im Handel erhältlich sind auch Verdickungsmittel auf der Basis von Acrylamid/Acrylsäure-Copolymerisaten, welche nach dem Verfahren der Fällungspolymerisation hergestellt werden. Nachteilig ist dabei, daß in der sauren Zustandsform, in der das Produkt anfällt, dessen Lagerstabilität unbefriedigend ist, und das Produkt ohne Rühren rasch sedimentiert und einen zusammenbackenden Produktkuchen bildet, der nicht mehr aufrührbar oder auflösbar ist. Aus diesem Grund wird das Produkt frühzeitig in die neutralisierte Form überführt, in der es zwar lagerstabil ist, aber eine sehr hohe Viskosität besitzt (10000 mPas bei 7% Festgehalt) und daher nur sehr verdünnt und damit unwirtschaftlich bereitgestellt werden kann.

Es bestand somit die Aufgabe, lagerstabile, niederviskose, wasserlösliche Polymere bereitzustellen, die als Verdickungsmittel eingesetzt werden können.

Gegenstand der Erfindung sind Verdickungsmittel auf der Basis von Carboxylgruppen- und Carboxylamidgruppenhaltigen Polymerisaten, erhältlich durch radikalische Polymerisation nach dem Emulsions- oder Suspensionspolymerisationsverfahren von
a) 30 bis 70 Gew% Carboxylgruppenhaltigen, ethylenisch ungesättigten Monomeren,
b) 10 bis 70 Gew% Carboxylamidgruppenhaltigen, ethylenisch ungesättigten Monomeren,
c) 0.1 bis 30 Gew% weiteren ethylenisch ungesättigten Monomeren,
in Gegenwart von mindestens 5 Gew% eines oder mehrerer wasserlöslicher Schutzkolloide aus der Gruppe umfassend Polyvinylalkohole, Polyvinylpyrrolidone und (Meth)acrylat/(Meth)acrylsäure-Copolymere, wobei sich die Angaben in Gewichtsprozent jeweils auf das Gesamtgewicht der Comonomere beziehen.

Geeignete Carboxylgruppenhaltige Monomere a) sind ethylenisch ungesättigte Mono- und Dicarbonsäuren, vorzugsweise Acrylsäure, Methacrylsäure, Maleinsäure, Itakonsäure, Fumarsäure und Crotonsäure. Besonders bevorzugt werden Acrylsäure und Methacrylsäure.

Geeignete Carboxylamidgruppenhaltige Monomere b) sind die Amide der unter a) genannten Säuren, vorzugsweise die Mono- und Diamide der Acrylsäure, Methacrylsäure, Maleinsäure, Itakonsäure, Fumarsäure und Crotonsäure. Besonders bevorzugt werden Acrylamid und Methacrylamid.

Als weitere ethylenisch ungesättigte Monomere geeignet sind hydrophobe Monomere, beispielsweise Vinylester, (Meth)acrylsäureester und Vinylaromaten. Bevorzugt werden die Methacrylsäureester und Acrylsäureester von C₁- bis C₁₂-Alkoholen, besonders bevorzugt n-Butylacrylat, n-Butylmethacrylat, 2-Ethylhexylmethacrylat, 2-Ethylhexylacrylat.

Vorzugsweise werden 30 bis 60 Gew% Carboxylgruppenhaltige Monomere a) und 30 bis 60 Gew% Carboxylamidhaltige Monomere b) copolymerisiert und der Anteil an hydrophobem Comonomer c) auf das notwendige Minimum, vorzugsweise 5 bis 20 Gew%, beschränkt.

Als Schutzkolloide werden vorzugsweise teilverseifte Polyvinylalkohole mit einer Höppler-Viskosität (DIN 53015, Methode nach Höppler, 4 %-ige wässrige Lösung) von 3 bis 28 mPas und einer Verseifungzahl von 70 bis 200 eingesetzt. Besonders bevorzugt werden teilverseifte Polyvinylalkohole mit einer Höppler-Viskosität von 3 bis 15 mPas und einer Verseifungszahl von 100 bis 150 eingesetzt. Die teilverseiften Polyvinylalkohole können gegebenenfalls auch im Gemisch mit weiteren wasserlöslichen Schutzkolloiden eingesetzt werden. Unter wasserlöslich ist dabei zu verstehen, daß unter Normalbedingungen mehr als 10 g pro Liter Wasser löslich sind. Die Schutzkolloide werden vorzugsweise in einer Menge von 10 bis 80 Gew% eingesetzt.

Die Herstellung der Verdickungsmittel erfolgt nach dem Verfahren der Emulsions- oder Suspensionspolymerisation in wässriger Phase, vorzugsweise bei Temperaturen von 30°C bis 60°C. Die Polymerisation wird durch die üblichen Initiatoren, öllösliche Initiatoren für die Suspensionspolymerisation und zumindest teilweise wasserlösliche Initiatoren für die Emulsionspolymerisation initiiert.

Bevorzugt wird die Herstellung nach dem Emulsionspolymerisationsverfahren. Die Initiierung erfolgt mittels der gebräuchlichen, zumindest teilweise wasserlöslichen Radikalbildner, die vorzugsweise in Mengen von 0.01 bis 3.0 Gew%, bezogen auf das Gesamtgewicht der Monomeren, eingesetzt werden. Beispiele hierfür sind Natriumpersulfat, Wasserstoffperoxid, t-Butylperoxid, t-Butylhydroperoxid; Kaliumperoxodiphosphat, Azobisisobutyronitril. Gegebenenfalls können die genannten radikalischen Initiatoren auch in bekannter Weise mit 0.01 bis 6.0 Gew%, bezogen auf das Gesamtgewicht der Monomeren, Reduktionsmittel kombiniert werden. Geeignet sind zum Beispiel Alkaliformaldehydsulfoxylate und Ascorbinsäure. Bei der Redoxinitiierung werden dabei vorzugsweise eine oder beide Redox-Katalysatorkomponenten während der Polymerisation dosiert.

Als Dispergiermittel können gegebenenfalls zusätzlich zum Schutzkolloidanteil noch anionische oder nichtionische Emulgatoren eingesetzt werden. Vorzugsweise werden keine Emulgatoren eingesetzt. Der für die Polymerisation gewünschte pH-Bereich, der im allgemeinen zwischen 2.0 und 10, vorzugsweise 2 und 3, liegt, kann in bekannter Weise durch Säuren, Basen und übliche Puffersalze, wie Alkaliphosphate oder Alkalicarbonate, eingestellt werden. Zur Molekulargewichtseinstellung können bei der Polymerisation die üblicherweise verwendeten Regler, zum Beispiel Mercaptane, Aldehyde und Chlorkohlenwasserstoffe zugesetzt werden.

Die Polymerisation kann im Batch-, Semi-Batch oder Dosierverfahren aber auch kontinuierlich durchgeführt werden. Besonders bevorzugt wird die Polymerisation als Vorlageverfahren durchgeführt, wobei die Monomeren vollständig vorgelegt werden und nur der Initiator zudosiert wird. Die Schutzkolloide können vollständig vorgelegt, vollständig dosiert oder teilweise vorgelegt und der Rest dosiert werden. Bevorzugt wird die vollständige Vorlage des Schutzkolloids. Das Vorlageverfahren bei dem die Monomeren und das Schutzkolloid vollständig vorgelegt werden garantiert im Vergleich zu Dosiervarianten ein höheres Molekulargewicht.

Mit der erfindungsgemäßen Verfahrensweise der Polymerisation im Emulsionspolymerisationsverfahren bzw. Suspensionspolymerisationsverfahren werden deutlich höhere Festgehalte zugänglich als mit dem bisher gebräuchlichen Fällungspolymerisationsverfahren, wodurch die Herstellung der Verdickungsmittel deutlich wirtschaftlicher wird. Es werden Dispersionen mit einem Festgehalt von 10 bis 40 %, bevorzugt 15 bis 30% erhalten, gegenüber 6 bis 8 % bei der Fällungspolymerisation.

Die Verdickungsmittel können in Form deren wässrigen Dispersionen eingesetzt werden. Es kann aber auch so vorgegangen werden, daß die mit dem erfindungsgemäßen Verfahren erhaltenen Dispersionen mittels bekannter Verfahren getrocknet werden, beispielsweise durch Sprühtrocknung, und als Pulver eingesetzt werden. Man geht dabei üblicherweise so vor, daß die Verdickerdispersion bzw. das Verdickerpulver dem zu verdickenden wässrigen System zugegeben wird, und anschließend durch Zugabe von Base der pH-Wert des Gemisches so eingestellt wird, daß die Carboxylatgruppen und Carboxylamidgruppen neutralisiert werden, die Copolymere in ihre wasserlösliche Form übergeführt werden und dabei ihre verdickende Wirkung entfalten.

Die Verdickungsmittel eignen sich zur Verdickung von wässrigen, hydraulisch abbindenden und nicht hydraulisch abbindenden Bindemittelzusammensetzungen. Beispielsweise als Verdickungsmittel in Beschichtungsmittelzusammensetzungen wie Dispersionsfarben, Textilbeschichtungen; als Verdickungsmittel in Klebstoff Zusammensetzungen; als Verdickungsmittel in Baustoffzusammensetzungen wie Beton, Zementmörtel, Kalkmörtel, Gipsmörtel. Die Einsatzmengen liegen dabei im allgemeinen in einem Bereich von 0.01 bis 5 Gew% Verdickungsmittel (fest), bezogen auf das Gesamtgewicht der zu verdickenden Zusammensetzung.

Besonders vorteilhaft ist der Einsatz der Verdickungsmittel in hydraulisch abbindenden Massen, da überaschenderweise gefunden, daß bei der erfindungsgemäßen Herstellung mittels Emulsions-bzw. Suspensionspolymerisation die gute verdickende Wirkung in hydraulisch abbindenden Massen nicht verloren geht. Überraschend ist dies deshalb, da üblicherweise bei der Polymerisation von Carbonsäuren und Carbonsäureamiden in wässriger Lösung besonders hohe Molekulargewichte erreicht werden, die für die gute Stellmittelwirkung verantwortlich sind. Es war nicht zu erwarten, daß bei Abwandlung des Verfahrens in ein zweiphasiges Verfahren gleich hohe Molekulargewichte erreicht werden.

### Beispiel 1:

### Herstellung eines Acrylamid/Acrylsäure-Copolymers mit 33 Gew% Polyvinylalkohol (Höppler-Viskosität 4 mPas, Verseifungszahl 140):

In ein Polymerisationsgefäß mit 3 Liter Volumen, Rührer und Zuläufe für zwei Dosierungen wurde die Vorlage gegeben und der Rührer gestartet. Die Drehzahl betrug 200 Upm.

| Vorlage: | |
|---|---|
| Wasser | 885 g |
| Acrylamid (30 %ige Lösung) | 147.4 g |
| Acrylsäure | 44.2 g |
| Polyvinylalkohol (20 %ige Lsg.) | 177 g |
| n-Butylacrylat | 17.7 g |

Zum Start der Polymerisation wurden 25 g einer 3 %-igen Lösung von Kaliumpersulfat und 25 g einer 1.5 %-igen Lösung von Brüggolit (Natriumformaldehydsulfoxylat) mit je 8 g/h dosiert.Die Innentemperatur wurde so geregelt, daß eine Reaktionstemperatur von 40°C nicht überschritten wurde. Die Dosierzeit betrug 3 h. Danach wurde der Ansatz gekühlt und durch Zugabe von 3 g einer 10 %-igen Lösung von t-Butylhydroperoxid und 6 g einer 1.5 %-igen Lösung von Brüggolit nachpolymerisiert. Es wurde eine koagulatfreie stabile Dispersion erhalten. Durch Zugabe von 700 g einer 3 %-igen wässrigen NaOH-Lösung wurde die Dispersion neutralisiert, wobei die Viskosität deutlich zunahm.
Die Daten zur Charakterisierung der Dispersion und zur anwendungstechnischen Prüfung sind in Tabelle 1 zusammengefaßt.

### Beispiel 2:

### Herstellung eines Acrylamid/Acrylsäure-Copolymers mit 33 Gew% Polyvinylalkohol (Höppler-Viskosität 4 mPas, Verseifungszahl 140):

Die Vorgehensweise entsprach Beispiel 1, wobei in Abwandlung zu Beispiel 1 folgende Mengen eingesetzt wurden:

| Vorlage: | |
|---|---|
| Wasser | 605 g |
| Acrylamid (30 %ige Lösung) | 480 g |
| Acrylsäure | 144 g |
| Polyvinylalkohol (20 %ige Lsg.) | 576 g |
| n-Butylacrylat | 57.6 g |

Zum Start der Polymerisation wurden die Initiatoren (3 %-ige Lösung von Kaliumpersulfat und 1.5 %-ige Lösung von Brüggolit) mit je 22 g/h dosiert. Nach 30 Minuten wurden zusätzlich 800 g Wasser innerhalb von 5 Minuten zugegeben. Die Innentemperatur wurde so geregelt, daß eine Reaktionstemperatur von 40°C nicht überschritten wurde. Die Dosierzeit der Initiatoren betrug 3 h. Danach wurde der Ansatz gekühlt und durch Zugabe von 8 g einer 10 %-igen Lösung von t-Butylhydroperoxid und 16 g einer 1.5 %-igen Lösung von Brüggolit nachpolymerisiert. Es wurde eine koagulatfreie stabile Dispersion erhalten. Die Daten zur Charakterisierung der Dispersion und zur anwendungstechnischen Prüfung sind in Tabelle 1 zusammengefaßt.

### Beispiel 3:

### Herstellung eines Acrylamid/Acrylsäure-Copolymers mit 66 Gew% Polyvinylalkohol (Höppler-Viskosität 4 mPas, Verseifungszahl 140):

Es wurde analog Beispiel 1 vorgegangen; in Abwandlung zu Beispiel 1 wurden folgende Mengen eingesetzt:

| Vorlage: | |
|---|---|
| Wasser | 1012 g |
| Acrylamid (30 %ige Lösung) | 400 g |
| Acrylsäure | 120 g |
| Polyvinylalkohol (20 %ige Lsg.) | 964 g |
| n-Butylacrylat | 50 g |

Zum Start der Polymerisation wurden die Initiatoren mit je 20 g/h dosiert. Die Innentemperatur wurde so geregelt, daß eine Reaktionstemperatur von 40°C nicht überschritten wurde. Die Dosierzeit der Initiatoren betrug 3 h. Danach wurde der Ansatz gekühlt und durch Zugabe von 5 g einer 10 %-igen Lösung von t-Butylhydroperoxid und 10 g einer 1.5 %-igen Lösung von Brüggolit nachpolymerisiert. Es wurde eine koagulatfreie stabile Dispersion erhalten. Die Daten zur Charakterisierung der Dispersion und zur anwendungstechnischen Prüfung sind in Tabelle 1 zusammengefaßt.

### Beispiel 4:

### Herstellung eines Acrylamid/Acrylsäure-Copolymers mit 33 Gew% Polyvinylalkohol (Höppler-Viskosität 4 mPas, Verseifungszahl 140):

Die Vorgehensweise entsprach Beispiel 1, wobei in Abwandlung zu Beispiel 1 folgende Mengen eingesetzt wurden:

| Vorlage: | |
|---|---|
| Wasser | 506 g |
| Acrylamid (30 %ige Lösung) | 200 g |
| Acrylsäure | 60 g |
| Polyvinylalkohol (20 %ige Lsg.) | 482 g |
| n-Butylacrylat | 25 g |

Zum Start der Polymerisation wurden die Initiatoren mit je 20 g/h dosiert. Nach 60 Minuten wurden zusätzlich 200 g Acrylamid (30 %-ig), 60 g Acrylsäure und 25 g n-Butylacrylat innerhalb von 5 Minuten zugegeben Die Innentemperatur wurde so geregelt, daß eine Reaktionstemperatur von 40°C nicht überschritten wurde. Die Dosierzeit der Initiatoren betrug 3 h. Danach wurde der Ansatz gekühlt und durch Zugabe von S g einer 10 %-igen Lösung von t-Butylhydroperoxid und 16 g einer 1.5 %-igen Lösung von Brüggolit nachpolymerisiert. Es wurde eine koagulatfreie stabile Dispersion erhalten. Die Daten zur Charakterisierung der Dispersion und zur anwendungstechnischen Prüfung sind in Tabelle 1 zusammengefaßt.

### Beispiel 5:

### Herstellung eines Acrylamid/Acrylsäure-Copolymers mit 16.5 Gew% Polyvinylalkohol (Höppler-Viskosität 4 mPas, Verseifungszahl 140) :

Die Vorgehensweise entsprach Beispiel 1, wobei in Abwandlung zu Beispiel 1 folgende Mengen eingesetzt wurden:

| Vorlage: | |
|---|---|
| Wasser | 658 g |
| Acrylamid (30 %ige Lösung) | 439 g |
| Acrylsäure | 132 g |
| Polyvinylalkohol (20 %ige Lsg.) | 263 g |
| n-Butylacrylat | 53 g |

Zum Start der Polymerisation wurden die Initiatoren mit je 20 g/h dosiert. Die Innentemperatur wurde so geregelt, daß eine Reaktionstemperatur von 40°C nicht überschritten wurde. Die Dosierzeit der Initiatoren betrug 3 h. Danach wurde der Ansatz gekühlt und durch Zugabe von 8 g einer 10 %-igen Lösung von t-Butylhydroperoxid und 16 g einer 1.5 %-igen Lösung von Brüggolit nachpolymerisiert. Es wurde eine koagulatfreie stabile Dispersion erhalten. Die Daten zur Charakterisierung der Dispersion und zur anwendungstechnischen Prüfung sind in Tabelle 1 zusammengefaßt.

### Vergleichsbeispiel 6:

### Herstellung eines Acrylamid/Acrylsäure-Copolymers mittels Fällungspolymerisation:

Die Vorgehensweise war analog Beispiel 1, wobei ohne Schutzkolloid mittels Fällungspolymerisation folgende Mengen eingesetzt wurden:

| Vorlage: | |
|---|---|
| Wasser | 908 g |
| Acrylamid (30 %ige Lösung) | 168 g |
| Acrylsäure | 50.5 g |

Zum Start der Polymerisation wurden die Initiatoren mit je 5 g/h dosiert. Die Innentemperatur wurde so geregelt, daß eine Reaktionstemperatur von 40°C nicht überschritten wurde. Die Dosierzeit der Initiatoren betrug 3 h. Danach wurde der Ansatz gekühlt und durch Zugabe von 8 g einer 10 %-igen Lösung von t-Butylhydroperoxid und 16 g einer 1.5 %-igen Lösung von Brüggolit nachpolymerisiert. Anschließend wurde durch Zugabe von 22 g NaOH in 800 g Wasser neutralisiert. Es wurde eine hochviskose Lösung des Copolymeren in Wasser erhalten. Die Daten zur Charakterisierung der Dispersion und zur anwendungstechnischen Prüfung sind in Tabelle 1 zusammengefaßt.

### Vergleichsbeispiel 7:

### Herstellung eines Acrylamid/Acrylsäure-Copolymers ohne Butylacrylat mit 38.8 Gew% Polyvinylalkohol (Höppler-Viskosität 4 mPas, Verseifungszahl 140):

Die Vorgehensweise entsprach Beispiel 1, wobei in Abwandlung zu Beispiel 1 folgende Mengen eingesetzt wurden:

| Vorlage: | |
|---|---|
| Wasser | 1000 g |
| Acrylamid (30 %ige Lösung) | 177 g |
| Acrylsäure | 50 g |
| Polyvinylalkohol (20 %ige Lsg.) | 200 g |
| n-Butylacrylac | 0 g |

Zum Start der Polymerisation wurden die Initiatoren mit je 10 g/h dosiert. Die Innentemperatur wurde so geregelt, daß eine Reaktionstemperatur von 40°C nicht überschritten wurde. Die Dosierzeit der Initiatoren betrug 3 h. Danach wurde der Ansatz gekühlt und durch Zugabe von 8 g einer 10 %-igen Lösung von t-Butylhydroperoxid und 16 g einer 1.5 %-igen Lösung von Brüggolit nachpolymerisiert. Es wurde eine wässrige Lösung erhalten. Die Daten zur Charakterisierung der Lösung und zur anwendungstechnischen Prüfung sind in Tabelle 1 zusammengefaßt.

### Vergleichsbeispiel 8:

### Herstellung eines Methacrylsäure/Methylmethacrylat-Copolymers gemäß EP-A 627450:

Es wurde das Beispiel 4 aus der EP-A 627450 nachvollzogen. Das Produkt fiel als stabile Dispersion mit allerdings sehr viel Siebrückstand an. Weitere Daten sind Tabelle 1 zu entnehmen.

### Anwendungstechnische Prüfung:

### Zur Überprüfung der verdickenden Wirkung der erfindungsgemäßen Beispiele und der Vergleichsbeispiele wurde folgender Test durchgeführt:

Es wurde eine Mörtelmischung mit folgender Rezeptur hergestellt (in g):

| | |
|---|---|
| Portlandzement PZ35F | 400 |
| Quarzmehl W8 | 100 |
| Quarzsand F34 | 505 |
| Kalkhydrat | 8 |
| Tylose MH2000XP | 1.5 |
| Wasser | 290 |
| Verdicker Beispiele (Festanteil) | 0.15 |

Anschließend wurde der Mörtel in eine Rinne nach Daniel gegeben und jeweils 1, 3, 5 und 10 Minuten gelagert. Nach der jeweiligen Lagerzeit wurde die Rinne senkrecht gestellt und nach jeweils 2 Minuten der Verlauf der Masse auf der Skala abgelesen. Ein hoher Wert heißt, daß die Masse noch sehr fließfähig ist, ein niedriger Wert bedeutet entsprechend, daß die Masse hochviskos bzw. standfest ist.

Aus den Ergebnissen in Tabelle 1 kann man erkennen, daß die erfindungsgemäßen Beispiele sowohl stabile Dispersionen liefern als auch gute anwendungstechnische Eigenschaften (Verdickerwirkung) besitzen. An den Vergleichsbeispielen erkennt man, daß entweder Stabilität der Dispersion (Vergleichsbeispiel 6/7) oder die Verdickungswirkung (Vergleichsbeispiel 8) fehlen.

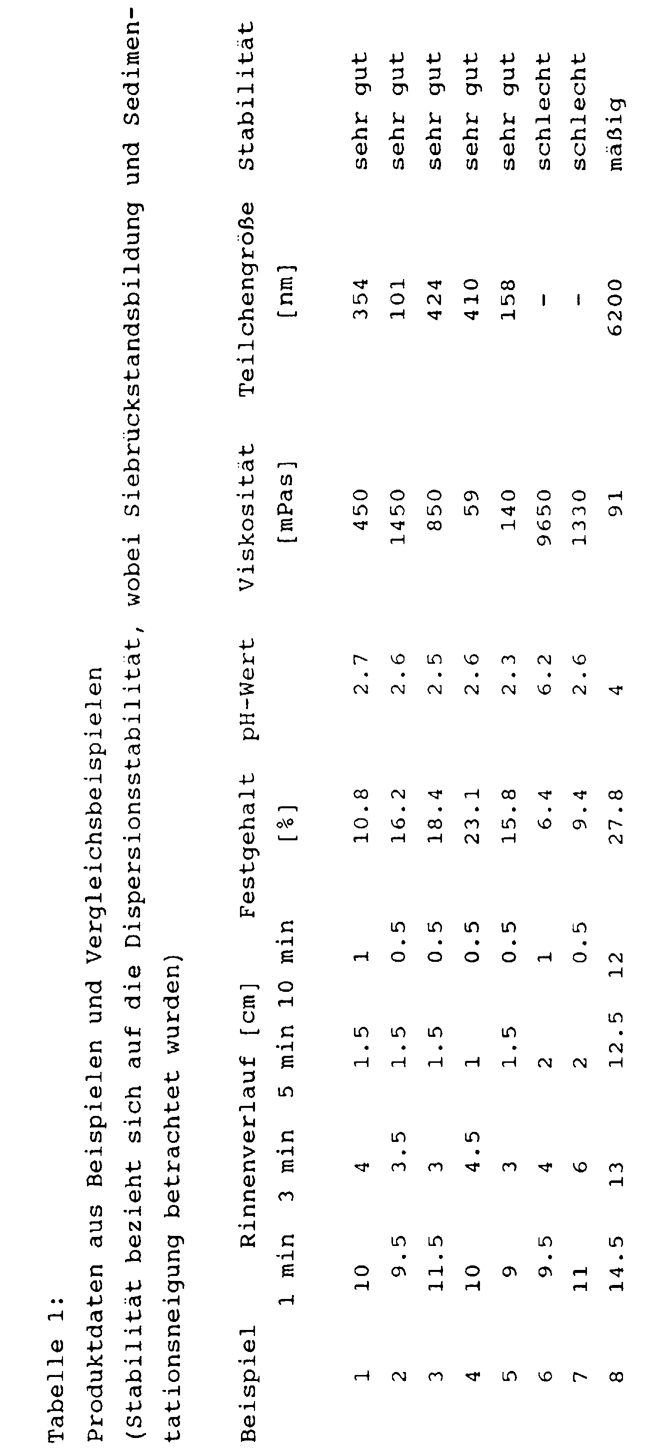

## Patentansprüche

1. Verdickungsmittel auf der Basis von Carboxylgruppen- und Carboxylamidgruppenhaltigen Polymerisaten, erhältlich durch radikalische Polymerisation nach dem Emulsions- oder Suspensionspolymerisationsverfahren von
a) 30 bis 70 Gew% Carboxylgruppenhaltigen, ethylenisch ungesättigten Monomeren,
b) 10 bis 70 Gew% Carboxylamidgruppenhaltigen, ethylenisch ungesättigten Monomeren,
c) 0.1 bis 30 Gew% weiteren ethylenisch ungesättigten Monomeren,
in Gegenwart von mindestens 5 Gew% eines oder mehrerer wasserlöslicher Schutzkolloide aus der Gruppe umfassend Polyvinylalkohole, Polyvinylpyrrolidone und (Meth)acrylat/(Meth)acrylsäure-Copolymere, wobei sich die Angaben in Gewichtsprozent jeweils auf das Gesamtgewicht der Comonomere beziehen.

2. Verdickungsmittel nach Anspruch 1, dadurch gekennzeichnet, daß
a) 30 bis 60 Gew% eines oder mehrerer Monomere aus der Gruppe umfassend Acrylsäure, Methacrylsäure, Maleinsäure, Itakonsäure, Fumarsäure und Crotonsäure, und
b) 30 bis 60 Gew% eines oder mehrerer Monomere aus der Gruppe umfassend Monoamide und Diamide der Acrylsäure, Methacrylsäure, Maleinsäure, Itakonsäure, Fumarsäure und Crotonsäure, und
c) 5 bis 20 Gew% eines oder mehrerer Monomerer aus der Gruppe der Vinylester, (Meth)acrylsäureester und Vinylaromaten copolymerisiert werden.

3. Verdickungsmittel nach Anspruch 1, dadurch gekennzeichnet, daß
a) 30 bis 60 Gew% eines oder mehrerer Monomere aus der Gruppe umfassend Acrylsäure und Methacrylsäure, und
b) 30 bis 60 Gew% eines oder mehrerer Monomere aus der Gruppe umfassend Acrylsäureamid und Methacrylsäureamid, und
c) 5 bis 20 Gew% eines oder mehrerer Monomerer aus der Gruppe umfassend n-Butylacrylat, n-Butylmethacrylat, 2-Ethylhexylmethacrylat und 2-Ethylhexylacrylat, copolymerisiert werden.

4. Verdickungsmittel nach Anspruch 1 bis 3, dadurch gekennzeichnet, daß in Gegenwart von 10 bis 80 Gew% von einem oder mehreren teilverseiften Polyvinylalkoholen mit einer Höppler-Viskosität von 3 bis 28 mPas und einer Verseifungzahl von 70 bis 200 polymerisiert wird.

5. Verdickungsmittel nach Anspruch 1 bis 4 zur Verdickung von wässrigen, hydraulisch abbindenden und nicht hydraulisch abbindenden Bindemittelzusammensetzungen.

6. Verdickungsmittel nach Anspruch 1 bis 4 zur Verdickung von Beschichtungsmittelzusammensetzungen, in Klebstoff Zusammensetzungen und in Baustoffzusammensetzungen.

7. Verfahren zur Herstellung von Verdickungsmitteln auf der Basis von Carboxylgruppen- und Carboxylamidgruppenhaltigen Polymerisaten durch radikalische Polymerisation nach dem Emulsions- oder Suspensionspolymerisationsverfahren von
a) 30 bis 70 Gew% Carboxylgruppenhaltigen, ethylenisch ungesättigten Monomeren,
b) 10 bis 70 Gew% Carboxylamidgruppenhaltigen, ethylenisch ungesättigten Monomeren,
c) 0.1 bis 30 Gew% weiteren ethylenisch ungesättigten Monomeren,
in Gegenwart von mindestens 5 Gew% eines oder mehrerer wasserlöslicher Schutzkolloide aus der Gruppe umfassend Polyvinylalkohole, Polyvinylpyrrolidone und (Meth)acrylat/(Meth)acrylsäure-Copolymere, wobei sich die Angaben in Gewichtsprozent jeweils auf das Gesamtgewicht der Comonomere beziehen.

8. Verfahren nach Anspruch 7, dadurch gekennzeichnet, daß die Herstellung nach dem Verfahren der Emulsionspolymerisation in wässriger Phase, bei Temperaturen von 30°C bis 60°C und ohne Zusatz von Emulgator erfolgt.

9. Verfahren nach Anspruch 7 und 8, dadurch gekennzeichnet, daß die Polymerisation als Vorlageverfahren durchgeführt, wobei die Monomeren und das Schutzkolloid vollständig vorgelegt werden und nur der Initiator zudosiert wird.

10. Verfahren nach Anspruch 7 bis 9, dadurch gekennzeichnet, daß die damit erhaltenen Dispersionen getrocknet werden.

11. Verfahren nach Anspruch 10, dadurch gekennzeichnet, daß die Trocknung mittels Sprühtrocknung erfolgt.

## Claims

1. Thickeners based on carboxyl- and carboxamido-containing addition polymers obtainable by free-radical emulsion or suspension polymerization of
a) from 30 to 70% by weight of carboxyl-containing, ethylenically unsaturated monomers,
b) from 10 to 70% by weight of carboxamido-containing, ethylenically unsaturated monomers and
c) from 0.1 to 30% by weight of further ethylenically unsaturated monomers
in the presence of at least 5% by weight of one or more water-soluble protective colloids from the group consisting of polyvinyl alcohols, polyvinylpyrrolidones and (meth)acrylate-(meth)acrylic acid copolymers, the percentages by weight being based in each case on the overall weight of the comonomers.

2. Thickeners according to Claim 1, characterized in that
a) from 30 to 60% by weight of one or more monomers from the group consisting of acrylic, methacrylic, maleic, itaconic, fumaric and crotonic acid, and
b) from 30 to 60% by weight of one or more monomers from the group consisting of monoamides and diamides of acrylic, methacrylic, maleic, itaconic, fumaric and crotonic acid, and
c) from 5 to 20% by weight of one or more monomers from the group of vinyl esters, (meth)acrylates and vinylaromatic compounds are copolymerized.

3. Thickeners according to Claim 1, characterized in that
a) from 30 to 60% by weight of one or more monomers from the group consisting of acrylic and methacrylic acid, and
b) from 30 to 60% by weight of one or more monomers from the group consisting of acrylamide and methacrylamide, and
c) from 5 to 20% by weight or one or more monomers from the group consisting of n-butyl acrylate, n-butyl methacrylate, 2-ethylhexyl methacrylate and 2-ethylhexyl acrylate are copolymerized.

4. Thickeners according to any of Claims 1 to 3, characterized in that polymerization is carried out in the presence of from 10 to 80% by weight of one or more partially hydrolysed polyvinyl alcohols having a Höppler viscosity of from 3 to 28 mPas and a hydrolysis number of from 70 to 200.

5. Thickeners according to any of Claims 1 to 4 for thickening aqueous, hydraulically setting and nonhydraulically setting binder compositions.

6. Thickeners according to any of Claims 1 to 4 for thickening coating compositions, in adhesive compositions and in building material compositions.

7. Process for preparing thickeners based on carboxyl- and carboxamido-containing addition polymers by free-radical emulsion or suspension polymerization of
a) from 30 to 70% by weight of carboxyl-containing, ethylenically unsaturated monomers,
b) from 10 to 70% by weight of carboxamido-containing, ethylenically unsaturated monomers, and
c) from 0.1 to 30% by weight of further ethylenically unsaturated monomers
in the presence of at least 5% by weight of one or more water-soluble protective colloids from the group consisting of polyvinyl alcohols, polyvinylpyrrolidones and (meth)acrylate-(meth)acrylic acid copolymers, the percentages by weight being based in each case on the overall weight of the comonomers.

8. Process according to Claim 7, characterized in that preparation takes place by the technique of emulsion polymerization in an aqueous phase at temperatures from 30 to 60°C and without the addition of emulsifier.

9. Process according to Claim 7 or 8, characterized in that the polymerization is conducted as an initial charge process in which all of the monomers and the protective colloid are included in the initial charge and only the initiator is metered in.

10. Process according to Claims 7 to 9, characterized in that the dispersions obtained thereby are dried.

11. Process according to Claim 10, characterized in that the drying is carried out by means of spray drying.

## Revendications

1. Agent épaississant à base de polymères contenant des groupements carboxyle et des groupements carboxylamide, pouvant être obtenu par polymérisation radicalaire suivant le procédé de polymérisation en émulsion ou en suspension de
a) 30 à 70% en poids de monomères éthyléniquement insaturés, contenant des groupements carboxyle,
b) 10 à 70% en poids de monomères éthyléniquement insaturés contenant des groupements carboxylamide,
c) 0,1 à 30% en poids d'autres monomères éthyléniquement insaturés,
en présence d'au moins 5% en poids d'un ou de plusieurs colloïdes protecteurs solubles dans l'eau parmi le groupe comprenant des poly(alcools de vinyle), des poly(pyrrolidones de vinyle) et les copolymères de (méth)acrylate/acide (méth)acrylique, les indications en pour-cent en poids se rapportant chaque fois au poids total des comonomères.

2. Agent épaississant suivant la revendication 1, caractérisé en ce que
a) 30 à 60% en poids d'un ou de plusieurs monomères parmi le groupe comprenant l'acide acrylique, l'acide méthacrylique, l'acide maléique, l'acide itaconique, l'acide fumarique et l'acide crotonique, et
b) 30 à 60% en poids d'un ou de plusieurs monomères parmi le groupe comprenant des monoamides et diamides de l'acide acrylique, l'acide méthacrylique, l'acide maléique, l'acide itaconique, l'acide fumarique et l'acide crotonique, et
c) 5 à 20% en poids d'un ou de plusieurs monomères parmi le groupe comprenant des esters vinyliques, des esters d'acide (méth)acrylique et des composés vinylaromatiques sont copolymérisés.

3. Agent épaississant suivant la revendication 1, caractérisé en ce que
a) 30 à 60% en poids d'un ou de plusieurs monomères parmi le groupe comprenant l'acide acrylique et l'acide méthacrylique, et
b) 30 à 60% en poids d'un ou de plusieurs monomères parmi le groupe comprenant l'amide d'acide acrylique et l'amide d'acide méthacrylique, et
c) 5 à 20% en poids d'un ou de plusieurs monomères parmi le groupe comprenant le n-butylacrylate, le n-butylméthacrylate, le 2-éthylhexylméthacrylate et le 2-éthylhexylacrylate,
sont copolymérisés.

4. Agent épaississant suivant la revendication 1 à 3, caractérisé en ce qu'il est polymérisé en présence de 10 à 80% en poids d'un ou de plusieurs poly(alcools de vinyle) partiellement saponifiés avec une viscosité d'Hôppler de 3 à 28 mPa.s et un indice de saponification de 70 à 200.

5. Agent épaississant suivant la revendication 1 à 4, pour l'épaississement de compositions de liants aqueuses à prise hydraulique et à prise non hydraulique.

6. Agent épaississant suivant la revendication 1 à 4, pour l'épaississement de compositions d'agents de revêtement, dans des compositions d'adhésif et dans des compositions de matériaux de construction.

7. Procédé de préparation d'agents épaississants à base de polymères contenant des groupements carboxyle et des groupements carboxylamide par polymérisation radicalaire suivant le procédé de polymérisation en émulsion ou en suspension de
a) 30 à 70% en poids de monomères éthyléniquement insaturés contenant des groupements carboxyles
b) 10 à 70% en poids de monomères éthyléniquement insaturés contenant des groupements carboxylamide,
c) 0,1 à 30 % en poids d'autres monomères éthyléniquement insaturés,
en présence d'au moins 5% en poids d'un ou de plusieurs colloïdes protecteurs solubles dans l'eau parmi le groupe comprenant les poly(alcools de vinyle), les poly(pyrrolidones de vinyle) et les copolymères de (méth)acrylate/acide (méth)acrylique, les indications en pour-cent en poids se rapportant chaque fois au poids total des comonomères.

8. Procédé suivant la revendication 7, caractérisé en ce que la préparation s'effectue suivant le procédé de la polymérisation en émulsion en phase aqueuse, à des températures de 30°C à 60°C et sans addition d'émulsionnant.

9. Procédé suivant la revendication 7 et 8, caractérisé en ce que la polymérisation est réalisée en tant que procédé à introduction préalable, les monomères et le colloïde protecteur étant introduits préalablement en totalité et seul l'initiateur étant ajouté.

10. Procédé suivant la revendication 7 à 9, caractérisé en ce que les dispersions ainsi obtenues sont séchées.

11. Procédé suivant la revendication 10, caractérisé en ce que le séchage s'effectue au moyen d'un séchage par pulvérisation.
